# EUROPÄISCHE PATENTSCHRIFT

(11) **EP 0 650 925 B1**
(45) Veröffentlichungstag und Bekanntmachung des Hinweises auf die Patenterteilung: **23.12.1998**
(21) Anmeldenummer: 94115976.6
(22) Anmeldetag: 10.10.1994
(51) Int. Cl.: C01B 31/14

(54) **Selektive Kohlefilter**
Selective carbon filter
Filtre à charbon sélectif

(30) Priorität: 12.10.1993 DE 4334767
(43) Veröffentlichungstag der Anmeldung: 03.05.1995
(73) Patentinhaber: MST MICRO-SENSOR-TECHNOLOGIE GMBH, D-82069 Hohenschäftlarn (DE)
(72) Erfinder: Nikolskaja, Elena J., Dr., RU-196233 St. Petersburg (RU); Maltzeva, Natalia W., Dr., RU-198188 St. Petersburg (RU); Loseva, Elena W., RU-198000 St. Petersburg (RU); Koroljeva, Evgenia B., Dr., RU-198000 St. Petersburg (RU)
(74) Vertreter: Böhm, Brigitte, Dipl.-Chem. Dr.

(56) Entgegenhaltungen:
- EP-A- 0 400 526
- DE-A- 2 407 887
- DATABASE WPI Week 9018, Derwent Publications Ltd., London, GB; AN 90-134562 & JP-A-2 080 314 (OSAKA GAS KK) 20. März 1990
- DATABASE WPI Week 8117, Derwent Publications Ltd., London, GB; AN 81-29779D & JP-A-56 022 617 (NIPPON JIDOSHA BUHIN SOG ET AL) 3. März 1981

## Beschreibung

Die vorliegende Erfindung betrifft ein Verfahren zur Herstellung von Filtermaterial aus Aktivkohlepresslingen, das Filtermaterial selbst sowie seine Verwendung zur selektiven Trennung von organischen und anorganischen Phasen.

JP 56022617 beschreibt ein Verfahren zur Herstellung von Aktivkohleformlingen durch Wärmebehandlung eines Gemisches aus einem wasserlöslichen, wärmeaushärtenden Harz, einem Bindemittel, CMC (Carboxymethylcellulose) und Aktivkohlepulver. Mit diesem Filter werden organische und anorganische Gaskomponenten aus Benzintanks und Autovergasern absorbiert. JP 2080314 beschreibt Aktivkohleformlinge in Plattenform, welche aus optisch anisotropem Granulat hergestellt werden und zur Gasabsorption verwendet werden. Keines dieser Filtermaterialien ist geeignet, selektiv organische und anorganische Phasen voneinander zu trennen.

Es besteht nach wie vor ein großer Bedarf an Filtermaterialien, welche es erlauben, selektiv organische und anorganische Phasen zu trennen, und deren Herstellung einfach und kostengünstig ist. Aufgabe der vorliegenden Erfindung war es daher, derartige Filtermaterialien bereitzustellen.

Gelöst wird die Aufgabe durch ein Verfahren zur Herstellung von Filtermaterial aus Aktivkohlepresslingen, mit Hilfe derer eine selektive Trennung von organischer und anorganischer Phase möglich ist, mit folgenden Schritten:
(a) Vermischen von Aktivkohlepulver mit Polvvinylalkoholpulver im Verhältnis 9:1 bis 3:1,
(b) Mischen des Pulvers aus Schritt (a) mit dest. Wasser oder einer Mischung von destilliertem Wasser und Ethylalkohol,
(c) Formen von Tabletten oder ähnlichen Gebilden in einer Form unter Druck und
(d) aufeinanderfolgendes Erhitzen der Tabletten auf
   1) 40 bis 80°C für 3 bis 6 Stunden,
   2) 80 bis 120°C für 10 bis 14 Stunden.

Es ist hierbei bevorzugt, unter (b) eine Mischung von destilliertem Wasser und Ethylalkohol mit einem Massenverhältnis von 10:0 bis 10:2 einzusetzen.

Des Weiteren werden die Komponenten (a) und (b) vorzugsweise im Massenverhältnis 1:1 bis 1:2 verwendet.

Das Pressen wird vorzugsweise unter Schritt (c) mit einem Druck von 20 bis 80 kg/cm² und besonders bevorzugt bei einem Druck von 50 kg/cm² durchgeführt. Diesen Druck hält man vorzugsweise 20 - 40 Sekunden und besonders bevorzugt 30 Sekunden lang. Es ist hierbei nicht ausschlaggebend, in welcher Art von Form die Preßlinge hergestellt werden. Dies hängt auch von der beabsichtigten Anwendung ab. Der genaue Druck, der angewendet wird, hängt auch von der gewünschten Porosität des Preßlings ab, die für die jeweilige Anwendung günstig ist. Dies kann der Fachmann durch einfache Vorversuche ermitteln oder anhand der Größenverhältnisse der zu trennenden Substanzen bestimmen. Es ist desweiteren möglich, Preßlinge mit Löchern und dabei mit definierten Verhältnissen von Lochgröße zu Tablettengröße und mit einer optimalen Menge an Löchern herzustellen. Auch dies wird von der Art der Anwendung abhängen und kann durch Vorversuche optimiert werden.

Ein weiterer Gegenstand der vorliegenden Erfindung ist ein Filtermaterial zur selektiven Abtrennung organischen Materials von einer anorganischen Phase, wobei das erfindungsgemäße Filtermaterial aus den nach dem erfindungsgemäßen Verfahren hergestellten Aktivkohlepreßlingen besteht.

Wiederum ein weiterer Gegenstand der vorliegenden Erfindung ist die Verwendung der erfindungsgemäßen Filtermaterialien zur selektiven Trennung von anorganischen und organischen Phasen.

Die vorliegende Erfindung wird durch das folgende Beispiel weiter erläutert.

### BEISPIEL 1

Zur Herstellung von erfindungsgemäßen Aktivkohlefiltern werden folgende Schritte durchgeführt:
1. Mischen von Aktivkohlepulver mit Pulver von Polyvinylalkohol bis zur Homogenität. Das Massenverhältnis von Aktivkohle zu Polyvinylalkohol liegt im Bereich von 9:1 bis 3:1. Die Aktivkohleteilchen sollten eine Größe im Bereich von 10 bis 50 µm aufweisen.
2. Mischen der angegebenen Komponenten mit einer Mischung von destilliertem Wasser und Ethylalkohol im Massenverhältnis von 10:0 bis 10:2.
3. Herstellen von Tabletten unter Verwendung einer Tablettenform oder einer anderen Form. Die oben beschriebene Masse wird unter einem Druck von 20 bis 80 kg/cm² zu Tabletten verpreßt. Dieser Druck wird 30 Sekunden lang gehalten. Alle Mischoperationen werden sehr sorgfältig bis zur vollen Homogenität durchgeführt.
4. Erhitzen der Tabletten in der Folge zuerst auf eine Temperatur von 60°C für 4 bis 5 Stunden, dann auf eine Temperatur von 100°C für 12 Stunden.

## Patentansprüche

1. Verfahren zur Herstellung von Filtermaterial aus Aktivkohlepreßlingen, mit Hilfe derer eine selektive Trennung von organischer und anorganischer Phase möglich ist, mit folgenden Schritten:
(a) Vermischen von Aktivkohlepulver mit Polyvinylalkohol-Pulver im Verhältnis 9:1 bis 3:1,
(b) Mischen des Pulvers aus Schritt (a) mit dest. Wasser oder einer Mischung von destilliertem Wasser und Ethylalkohol,
(c) Formen von Tabletten oder ähnlichen Gebilden in einer Form unter Druck und
(d) aufeinanderfolgendes Erhitzen der Tabletten auf
1) 40 bis 80°C für 3 bis 6 Stunden,
2) 80 bis 120°C für 10 bis 14 Stunden.

2. Verfahren nach Anspruch 1,
**dadurch gekennzeichnet,**
daß man unter (b) eine Mischung von Wasser und Ethylalkohol mit einem Massenverhältnis von 10:0 bis 10:2 einsetzt.

3. Verfahren nach einem der vorhergehenden Ansprüche,
**dadurch gekennzeichnet,**
daß man die Mischungen (a) und (b) im Massenverhälntis von 1:1 bis 1:2 einsetzt.

4. Verfahren nach einem der vorhergehenden Ansprüche,
**dadurch gekennzeichnet,**
daß man unter Schritt (c) mit einem Druck von 20 bis 80 kg/cm² arbeitet und 20 bis 40 Sekunden bei diesem Druck hält.

5. Filtermaterial zur selektiven Abtrennung organischen Materials von einer anorganischen Phase, bestehend aus Aktivkohlepresslingen, erhältlich gemäß dem Verfahren nach einem der Ansprüche 1 bis 4.

## Claims

1. A process for the preparation of filter material from activated carbon compacts which make possible the selective separation of organic and inorganic phases, with the following steps:
(a) mixing activated carbon powder with polyvinyl alcohol powder in the ratio of 9:1 to 3:1,
(b) mixing the powder from step (a) with distilled water or a mixture of distilled water and ethyl alcohol,
(c) shaping in a mould under pressure to form pellets or similar structures, and
(d) successively heating the pellets to
1) 40 to 80°C for 3 to 6 hours,
2) 80 to 120°C for 10 to 14 hours.

2. A process according to Claim 1, characterised in that a mixture of water and ethyl alcohol with a mass ratio of 10:0 to 10:2 is used in (b).

3. A process according to any one of the preceding Claims, characterised in that the mixtures (a) and (b) are used in a mass ratio of 1:1 to 1:2.

4. A process according to any one of the preceding Claims, characterised in that step (c) is performed at a pressure of 20 to 80 kg/cm² and is maintained for 20 to 40 seconds at this pressure.

5. A filter material for the selective separation of organic material from an inorganic phase, comprising activated carbon compacts which can be produced by the process according to any one of Claims 1 to 4.

## Revendications

1. Procédé pour la préparation d'un matériau de filtre à partir de préformes en charbon actif, à l'aide desquelles il est possible de procéder à une séparation sélective entre la phase organique et la phase minérale, avec les étapes suivantes :
(a) mélange de poudre de charbon actif avec une poudre d'alcool de polyvinyle dans un rapport 9:1 à 3:1,
(b) mélange de la poudre provenant de l'étape (a) avec de l'eau distillée ou un mélange d'eau distillée et d'alcool éthylique,
(c) formage de comprimés ou d'objets de configuration analogue dans un moule sous pression, et
(d) chauffage successif des comprimés à
1) 40 à 80°C pendant 3 à 6 heures,
2) 80 à 120°C pendant 10 à 14 heures.

2. Procédé selon la revendication 1,
caractérisé en ce que sous (b) on introduit un mélange d'eau et d'alcool éthylique avec un apport de masse de 10:0 à 10:2.

3. Procédé selon l'une des revendications précédentes, caractérisé en ce que l'on met en oeuvre le mélange (a) et (b) dans un rapport molaire de 1:1 à 1:2.

4. Procédé selon l'une des revendications précédentes, caractérisé en ce que l'on travaille à l'étape (c) avec une pression de 20 à 80 kg/cm² et que l'on maintient pendant 20 à 40 secondes à cette pression.

5. Matériau de filtre pour la séparation sélective entre un matériau organique et un matériau minéral constitué de préformes de charbon actif, pouvant être obtenues selon le procédé des revendications 1 à 4.
